# EUROPEAN PATENT SPECIFICATION

(11) **EP 2 802 090 B1**
(45) Date of publication and mention of the grant of the patent: **31.07.2019**
(21) Application number: 13166893.1
(22) Date of filing: 07.05.2013
(51) Int. Cl.: H04B 7/155

(54) **Digital repeater device**
Digitale Repeatervorrichtung
Dispositif de répétiteur numérique

(43) Date of publication of application: 12.11.2014
(73) Proprietor: Andrew Wireless Systems GmbH, 86675 Buchdorf (DE)
(72) Inventor: Braz, Oliver, 86653 Monheim (DE); Schmidt, Nelson Christian, Jr., Lexington, VA 24450 (US)
(74) Representative: Maikowski & Ninnemann Patentanwälte Partnerschaft mbB

(56) References cited:
- EP-A1- 2 472 740
- CN-A- 102 026 423
- CN-U- 202 218 423

## Description

The invention is defined in independent claim 1. Advantageous embodiments are set out in the dependent claims.

A digital repeater device of this kind comprises a common processing unit and at least one channel module connected to the common processing unit. The at least one channel module has at least one donor port for transmitting to and receiving analog RF signals from a telecommunications network. Herein, the at least one channel module is constituted to generate, in a downlink direction, a digitized RF signal from an analog RF signal received via the donor port and to forward the digitized RF signal to the common processing unit for further processing. In an uplink direction, the channel module generates an analog RF signal from a digitized RF signal received from the common processing unit and forwards the analog RF signal to the donor port.

Herein, the downlink direction is referred to as the direction from a network (including for example a base station) towards a mobile or other communication device in a telecommunications network such as a GSM, 3G, 4G or LTE network. The uplink direction, in contrast, indicates the opposite direction from the communication device to the telecommunications network.

A digital repeater, as it is for example known from EP 1 109 332 A2, serves to repeat radio frequency (RF) signals to for example provide coverage in a isolated or shielded environment or to improve coverage in areas in which the signal strength is weak and /or dedicated bands, subbands or carriers shall be provided only. For this purpose, the digital repeater of EP 1 109 332, in the downlink direction, downconverts a received analog RF signal and digitizes the RF signal in order to process the digitized RF signal in the digital baseband. The processed digitized RF signal is then converted into an analog signal, is upconverted and amplified and transmitted via a coverage antenna into the coverage area in which coverage is to be provided. The processing in the uplink direction takes place in an analogous fashion including a digital baseband processing and a power amplification for transmission via a donor antenna providing a link to for example a base station.

With the exponential growth of mobile data traffic in recent years, people nowadays have a high expectation of being able to get on the Internet independent of their location. Wireless LAN (WLAN) according to the IEEE 802.11 standard is nowadays implemented in almost every mobile or portable device. Operating in an unlicensed spectrum either at 2.4 GHZ or 5 GHz around the world, it is on its way to become a globally standardized air interface. Even though it currently is lacking several features which other mobile wireless communication standards like CDMA, GSM, UMTS or LTE offer, such as a handover methodology, sophisticated equalizer algorithms etc., it is of interest for wireless coverage in stationary isolated or shielded environments like indoor environments and mobile environments (in trains, busses or planes or on ships like ferry boats).

Having implemented multiple antenna techniques (MIMO) which are working well in rich scattering indoor environments especially as well as targeting for a data rate of up to 1300 Mbps in the next release (802.11 ac), WLAN fits well to the aforementioned increasing mobile data traffic requirements.

In this regard, however, a problem which yet has to be addressed is how such data rates shall be transported or distributed to different locations. Cable-based connections are usually very expensive to install and may not be possible everywhere, in particular for mobile applications. Thus, a backhaul often has to rely on various other wireless communication standards in a plurality of different frequency bands all over the world. Wireless modem or routers for translating signals from one standard into another standard are well known in the art, but often are suffering from issues which all Software Defined Radio (SDR) techniques suffer from. While digital baseband processing can flexibly and cost effectively be realized, a bottleneck for the introduction of such techniques remains in the availability of a universal "programmable" RF front-end (compare Asad A. Abidi, "The Path to the Software-Defined Radio Receiver", IEEE Journal of Solid-State Circuits, Vol. 42, No. 5, May 2007, pp. 954 - 966.).

With respect to efficient bandwidth utilization it is of importance to control adjacent channel interference issues. Even though progress in the design of highly linear broadband amplifiers has been made in recent years, the use of pre- and post-filtering still is indispensable. Facing constantly shrinking physical volume requirements for wireless modems, especially in mobile applications, and being aware that each additional frequency band implemented might result in larger dimensions poses another issue.

Typically, for schemes using a single carrier (e.g. GPRS, see for example Anders Furuskär, Sara Mazur, Frank Müller, Håkan Olofsson "EDGE: Enhanced data rates for GSM and TDMA/136 evolution", IEEE Personal Communications, vol. 6, pp. 56 - 66, June 1999) or multiple carriers utilizing multiple-input-multiple-output (MIMO) antenna schemes (e.g. LTE, see for example Jungnickel V. et al., "Interference-Aware Scheduling in the Multiuser MIMO-OFDM Downlink," IEEE Communications Magazine, pp. 56-66, June 2009) a dynamic range of 20 to 30 dB is sufficient to achieve a high data throughput. Taking into account propagation losses in conjunction with near-far effects, shadowing, fading etc., the dynamic range however must be enhanced to 60 to 90 dB for such carriers. This difference in dynamic range provides a potential for optimization when combining off-air telecommunication systems with WiFi- or Ethernet-based applications.

In addition, it is assumed that radio coverage for legacy- or new subscriber-based voice and data communication systems will have to be supported in parallel. At the transition from outside to inside and vice versa, signals involved do not necessarily have to be translated, but with respect to the high signal-to-noise and interference ratio (SNIR) required for high data throughput must be amplified. To provide such additional repeater functionality furthermore increases the complexity of the problem.

EP 2 472 740 A1 discloses a wireless train communication system comprising a repeater unit for receiving and transmitting wireless voice communication and a data communication router for receiving and transmitting wireless data communication. A distributed antenna such as a leaky feeder extends over several carriages of a train and is connected to the repeater unit and the data communication router for providing distributed access to the repeater unit and the data communication router to mobile terminals in the carriages.

CN 102 026 423 A describes a 3G+WIFI mobile router. The mobile router consists of a 3G functional unit and a WiFi functional unit. The 3G functional unit and the WiFi functional unit are connected via a data interface which is operable to complete a data exchange between the different units.

CN 202 218 423 U describes a router having a common processing unit connected to a 3G module and a WiFi module.

It is an object of the present idea disclosed to provide a repeater concept which alleviates all or at least some of the above-discussed issues. Another object of the idea disclosed is to provide a modular repeater concept which, at a relatively low cost, provides good data and voice communication to a plurality of users or devices.

This object is achieved with a digital repeater device having the features of claim 1.

Herein, the digital repeater device further comprises at least one modem module connected to the common processing unit and comprising at least one data port for communicating with a data communication network. The at least one modem module is constituted to translate, in the downlink direction, a digitized RF signal received via the at least one channel module and associated with a data communication link of the telecommunications network into a data signal for transmission via the at least one data port to the data communication network. The at least one modem module furthermore is constituted to translate, in the uplink direction, a data signal received via the at least one data port into a digitized RF signal to be forwarded to the at least one channel module.

The digital repeater hence comprises one or multiple channel modules and in addition one or multiple modem modules. Both, the channel modules and the modem modules are connected to the common processing unit of the repeater device. The channel module serves to receive, in the downlink direction, an analog RF signal from a telecommunications network, to digitize the analog RF signal and to forward it to the common processing unit. Via the common processing unit the digitized RF signal is then forwarded to a modem module, which translates the digitized RF signal and transmits it to a data communication network different from the telecommunications network. In the uplink direction, in turn, a data signal received from the data communication network at the modem module is translated into a digitized RF signal and is forwarded via the common processing unit to the channel module. Via the channel module the digitized RF signal is then converted into an analog RF signal and is transmitted for example via a donor antenna connected to the donor port of the channel module to the telecommunications network.

The digital repeater device hence comprises both a channel module having functions similar to a conventional digital repeater, as it is known for example from EP 1 109 332 A2, and a modem module for providing access to a data communication network. The data communication network herein may for example be a wireless communication network such as a wireless local area network (WLAN). The data communication network just as well may also be, however, a cable-bound communication network such as an Ethernet network (local area network, LAN).

Via the repeater device thus a data communication link of a telecommunications network (also denoted as data carrier) such as but not limited to a GPRS, EDGE, HSPA, HSPA+, WiMAX, EVDO, CDMA2000 or LTE link may be translated into a generally accepted, standardized and widely available network interface, for example WLAN. Data received via for example an LTE carrier in this way may be processed and translated into WLAN data. A mobile terminal hence connecting to the modem module via WLAN may receive and transmit data via its WLAN interface, wherein the modem module in the downlink direction translates data received from a data communication link such as an LTE carrier into WLAN data and in the uplink direction translates WLAN data into a digitized RF signal for transmission via the data communication link.

The repeater device may for example be installed in a stationary environment such as an indoor environment or in a mobile environment such as on a train, on a bus, on a ship, in a plane or the like. Via the repeater device hence coverage may be provided to (stationary or mobile) isolated or shielded environments, wherein a mobile terminal may communicate in the isolated or shielded environment via the data communication network, for example WLAN, to receive and transmit data. The repeater device herein processes data received from a data communication link, such as an LTE link, via the channel module for translation into the data signal of the data communication network, and vice versa translates the data signal of the data communication network into a digitized RF signal to be transmitted via the data communication link on the uplink.

The channel module comprises at least one coverage port for transmitting and receiving analog RF signals associated with the voice communication link. The channel module thus is constituted to generate, in a downlink direction, an analog RF signal from a digitized RF signal received from the common processing unit and to forward the analog RF signal to the coverage port for transmission into a coverage area. Vice versa, the channel module is constituted to generate, in an uplink direction, a digitized RF signal from an analog RF signal received via the coverage port from the coverage area and to forward the digitized RF signal to the common processing unit. The channel module hence, together with the common processing unit, serves as a repeating device which in a transparent fashion may repeat voice carriers, such as GSM or 3G voice carriers (for example in the GSM DCS-1800 band) in a transparent fashion.

The channel module herein, in the downlink direction, may downconvert a received RF analog system and may digitize it to provide it to the common processing unit for a baseband processing. The common processing unit then sends the processed digitized RF signal back to the channel module, which converts the digitized RF signal back into an analog RF signal, upconverts the RF signal and amplifies it for transmission into the coverage area, for example a shielded environment within a building or within a train, a bus, a plane, a ship or the like. In the uplink direction, a signal received from the coverage area is downconverted and is then digitized to provide a digitized RF signal to the common processing unit, which performs a baseband processing and forwards the processed digitized RF signal back to the channel module, which then converts the digitized RF signal back to an analog RF signal, upconverts it, amplifies it and transmits it in the uplink direction for example to a base station. Because no demodulation or modulation takes place within the channel module or the common processing unit, the repeating device, for repeating voice data in a voice communication link, is transparent in that it acts on the physical signals regardless of its contents.

The functionality of the channel module for repeating voice carriers is similar as described in EP 1 109 332 2 A2.

The common processing unit may for example comprise at least one programmable filter to perform a channel selection and/or a gain adjustment on digitized RF signals to be forwarded to the coverage port of the channel module in the downlink direction or to the donor port of the channel module in the uplink direction. A common processing unit herein performs a baseband processing of the digitized RF signals to for example select at least one subband containing multiple communication channels or to select a single communication channel of a subband. Herein, a frequency band, for example the DCS-1800 frequency band ranging from 1805,2 to 1879,8 MHZ in the downlink direction and from 1710,2 MHZ to 1784,8 MHZ in the uplink direction, may comprise several subbands, wherein each subband may comprise several carriers (channels). By means of the programmable filter a subband or a channel may be selected, and a gain adjustment for channels of an entire subband or a single channel may be carried out. The programmable filter may be implemented on the same chip, for example a field programmable gate array (FPDA), as the common processing unit. The at least one filter is programmable in that by setting its filter coefficients it is determined what subband or what channels in what frequency ranges are selected and in what way a transfer function for example for the purpose of a gain adjustment is adapted.

The programmable filter may be implemented as a digital filter bank for filtering a multiplicity of different channels and/or subbands in one or multiple frequency bands.

Also, multiple programmable filters may be present to select multiple channels and/or subbands in one or multiple frequency bands.

The channel module, comprising at least one coverage port and at least one donor port, may act as a transparent repeating device for repeating voice data channels to provide coverage in a predefined coverage area, wherein in parallel via the channel module an RF signal associated with a data communication link such as an LTE link is forwarded by means of the common processing unit to the modem module for communication with the data communication network, hence providing access to the data communication link in the coverage area by means of the data communication network. In this regard, the channel module not necessarily must comprise a coverage port. It rather is also conceivable that the channel module comprises two or more donor ports (and no coverage port) in order to only serve data communication links in that, in the downlink, data communication links, such as LTE carriers, are received via the two donor ports for example from two different base stations or from one base station comprising for example a multiple-in-multiple-out (MIMO) antenna, are digitized in two separate paths within the channel module and are provided to the common processing unit for forwarding to the modem module. In the uplink, in turn, RF signals can be sent out via the two donor ports to one or multiple base stations.

The common processing unit may, in one embodiment, comprise a programmable router which in the downlink direction directs a digitized RF signal to the at least one modem module. By means of the programmable router the digitized RF signal hence is forwarded to the modem module, wherein in the modem module the digitized RF signal is demodulated and translated into a data signal according to the data communication network communicating with the modem module.

Conventionally, carriers in a telecommunication network such as LTE have a dynamic range between 60 and 90 dB in order to account for propagation losses in conjunction with near-far effects, shadowing, fading and the like occurring on communication links between a base station and a mobile station. However, for achieving a high data throughput a dynamic range of 20 to 30 dB may be sufficient, providing a potential for optimization of data throughput when propagation losses, near-far effects, shadowing, fading and the like are of lesser importance, as it is the case in confined environments for example in a building or on a train, a plane or the like. Hence, for transmitting the data signal to the data communication network via the modem module the underlying signal may be compressed to reduce the dynamic range and hence to increase the data throughput. For example, a digitized RF signal having 16 bits may be compressed to 4 bits, 5 bits or 6 bits, such that less bits must overall be transmitted. This compression may take place for example in the common processing unit in the downlink direction, hence decreasing the dynamic range of the data signal to be communicated to the data communication network. In turn, in the uplink direction, the signal may be digitally amplified resulting in a dynamic range necessary for the data communication link, for example the LTE link, such that the RF signal is sent out via the channel module in the uplink direction to for example a base station with a sufficient dynamic range. Because of the compression of the signal and the reduction of the number of bits to be transmitted in the downlink direction an optimized bit stream width can be achieved, allowing for a combination of data from multiple data carriers in multiple frequency channels on multiple channel modules to a single modem module.

In one embodiment, the compression in the downlink direction depends on the frequency band of the data communication link. In this regard, for different frequency bands a different compression may be applied. The compression information herein may be stored and used also for the amplification in the uplink direction to compensate for different path losses and to keep the data communication link balanced.

The repeater device may be set up as a modular device having different channel modules and modem modules which in a releasable fashion may be attached to a housing and hence may be combined to provide a repeater device specifically adapted to the needs in a particular environment. For example, the housing of the digital repeater device may have a plurality of slots for receiving a channel module or a modem module, wherein each channel module and each modem module is releasably inserted into one slot. The slots herein are all alike such that a channel module or a modem module may be inserted into each slot. Because channel modules and modem modules may be combined in a versatile fashion, a versatile device is provided which may be of low cost and may be adapted to the specific needs in a specific application in a specific environment.

To provide additional voice carrier services in a particular band, for example the DCS-1800 band or a subband of the DCS-1800 band, simply one ore multiple additional channel filters have to be loaded into the processing unit. Additional bands such as UMTS 2100 may be added by connecting additional channel modules to open slots of the repeater device, hence enhancing the repeating capacities of the repeater device.

With each slot an interface unit may be associated for establishing the connection between the channel module and the common processing unit or the modem module and the common processing unit. The interface unit herein may work together both with a channel module and a modem module such that each slot may be used in conjunction with a channel module or a modem module. There hence are no specific slots which may be used with the channel module or a modem module only, but each slot may be used, dependent on the specific requirements and needs, together with a channel module or a modem module.

In one embodiment, the repeater device may further comprise a combining unit for combining two or more donor ports and/or two or more coverage ports into a single donor port to be connected with a single donor antenna or a single coverage port to be connected with a single coverage antenna. By means of the combining unit, hence, the different donor ports of different channel modules and/or the different coverage ports of different channel modules may be combined such that signals in different frequency bands may be received and transmitted with a single antenna.

In this regard, for example, a distributed antenna system, as it is for example known from EP 2 472 740 A1, such as leaky feeder or the like, can be used to provide a distributed access to the repeater device for example in a shielded environment in a building or on a train, a bus, a plane or the like.

The idea underlying the idea disclosed shall subsequently be described in more detail in reference to the embodiments shown in the Figures. Herein,
- Fig. 1: shows a schematic view of a repeater device;
- Fig. 2: shows a schematic functional drawing of the repeater device of Fig. 1;
- Fig. 3a: shows a schematic drawing illustrating subbands in a frequency band and their processing by means of the repeater device;
- Fig. 3b: shows in a schematic drawing a compression of a received RF signal;
- Fig. 4: shows a schematic functional drawing of a repeater device comprising a channel module and a modem module; and
- Fig. 5: shows in a schematic functional drawing a repeater device comprising a channel module and a modem module, wherein the channel module comprises two donor ports.

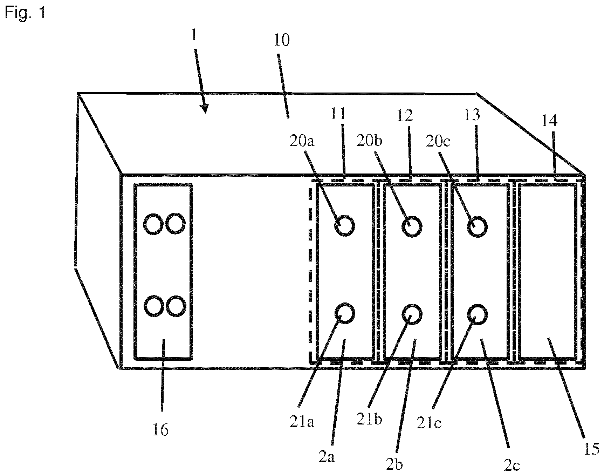

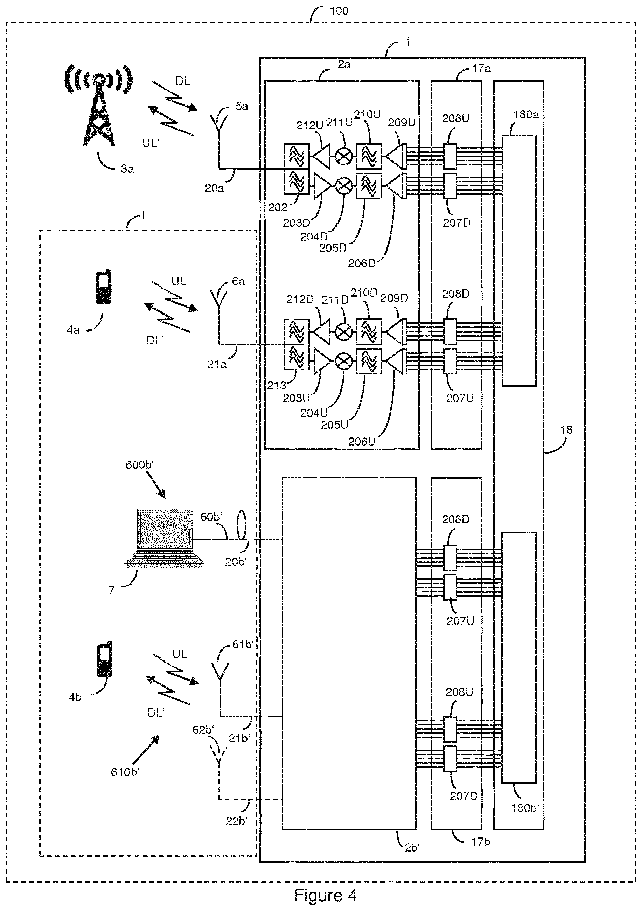

Fig. 1 shows a digital repeater device 1 comprising a housing 10 having multiple slots 11-14 into which channel modules 2a, 2b, 2c or modem modules 2b' (see Fig. 4) can be releasable inserted to provide a modular repeating device which can be flexibly adjusted in its setup dependent on the needs to provide a desired repeating functionality.

In the depicted example the repeater device 1 comprises four slots 11-14 into which three channel modules 2a, 2b, 2c are inserted. One slot 14, in the depicted example, is left empty and covered by a cover element 15 to close and cover a slot opening.

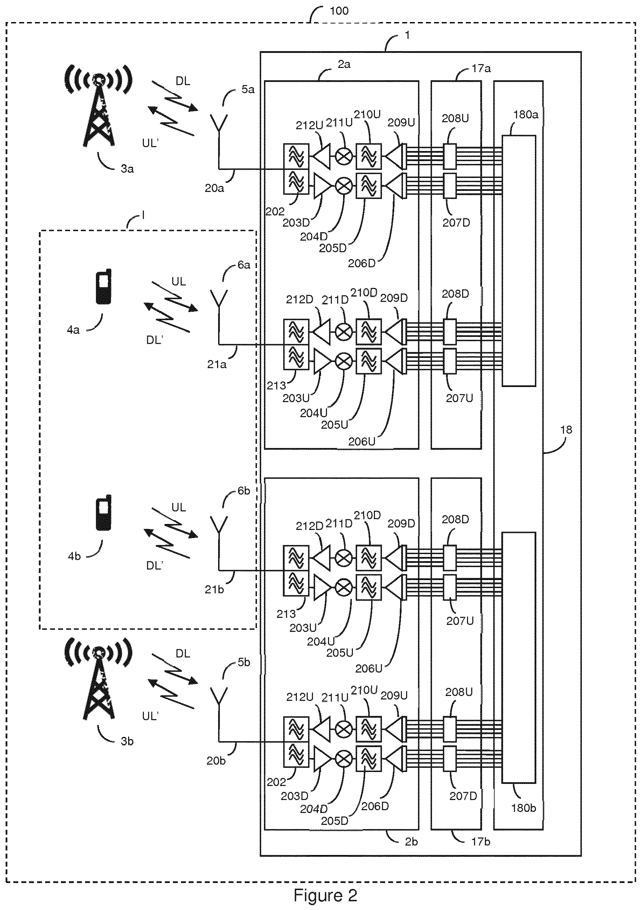

The setup of the repeater device 1 can be chosen in dependence on the specific needs to provide coverage in a coverage area I (see for example Fig. 2). Each channel module 2a, 2b, 2c, as depicted in Fig.1, herein comprises at least one donor port 20a, 20b, 20c and at least one coverage port 21a, 21b, 21c, to which at least one donor antenna 5a, 5b (see Fig. 2) respectively at least one coverage antenna 6a, 6b can be attached to wirelessly communicate with base stations 3a, 3b of a telecommunication network outside the coverage area I and terminals such as mobile devices in the coverage area I.

The repeater device 1 furthermore may comprise a combining unit 16 which serves to combine two or more of the donor ports 20a, 20b, 20c and/or the coverage ports 21a, 21b, 21c of the channel modules 2a, 2b, 2c to a single donor port respectively a single coverage port. To this single donor port or coverage port a single antenna, for example a distributed antenna system, may be attached. The combining unit 16 combines signals from different donor ports 20a, 20b, 20c or coverage ports 21a, 21b, 21c in the transmission direction and splits the signals in the reception direction. (In this regard it is to be noted that spatially multiplexed signals such as MIMO signals in general cannot be combined, but require multiple ports 20a, 20b, 20c, 21a, 21b, 21c to provide multiple communication streams.)

Fig. 2 shows a communication system 100 comprising a digital repeater device 1 which is in communication with base stations 3a, 3b of a telecommunication network outside of a coverage area I and with terminals 4a, 4b such as mobile devices, for example smart phones or the like, inside the coverage area I. The repeater device 1 in the example of Fig. 2 comprises two channel modules 2a, 2b each of which has a donor port 20a, 20b connected to a donor antenna 5a, 5b and a coverage port 21a, 21b connected to a coverage antenna 6a, 6b. The channel modules 2a, 2b are inserted into respective slots 11-14 of the repeater device 1 (see Fig. 1) and are connected via interface units 17a, 17b to a common processing unit (CPU) 18 which is common to all channel modules 2a, 2b (shown in Fig. 2 are two channel modules 2a, 2b as an example; the repeater device 1 may however comprise more channel modules, such as four or eight channel modules) of the repeater device 1 and provides for a digital baseband processing of signals received and transmitted via the donor antennas 5a, 5b and the coverage antennas 6a, 6b.

Between the base stations 3a, 3b and the donor antennas 5a, 5b connected to the donor ports 20a, 20b of the channel modules 2a, 2b radio communication links are established, for example GSM-900 or LTE-1800 communication links. By means of the repeater device 1 of Fig. 2, the communication links herein are, in a transparent fashion, repeated into the coverage area I, which may be for example a shielded environment in a building or a train, a bus, a plane or the like or another environment in which coverage shall be improved.

In a downlink DL, herein, the donor antenna 5a, 5b receives an RF signal from the associated base station 3a, 3b and forwards the RF signal via the donor port 20a, 20b to a duplexer 202, which is constituted by an RF filter and serves to separate the downlink DL from an uplink UL' (in a time division duplex (TDD) system (such as for example a WiMAX system) the duplexers 202 may be replaced by switches).

From the duplexer 202 the received analog RF signal is forwarded to a low noise amplifier 203D and provided to a frequency down mixer 204D which serves to downconvert the received analog RF signal. Subsequently, the now downconverted analog RF signal passes a filter 205D which may be constituted to filter out a specific frequency band in the downlink direction. The filter 205D may for example be a surface acoustic wave (SAW) filter and may constitute a frequency selective filter such as a bandpass filter.

The analog RF signal is then passed to an analog-to-digital converter 206D, which generates a digitized RF signal and provides the digitized RF signal to the common processing unit 18 via an interface 207D of an interface unit 17a, 17b associated with the slot 11-14 the channel module 2a, 2ab is plugged into.

Via the interface 207D the digitized RF signal is provided to at least one programmable filter 180a, 180b of the common processing unit 18. The programmable filter 180a, 180b digitally filters and/or gain-adjusts the digitized RF signals of the respective communication links, wherein a single channel or a subband comprising multiple channels may be selected by means of the digital programmable filter 180a, 180b and forwarded to an interface 208D of the interface unit 17a, 17b associated with the channel module 2a, 2b.

The programmable filters 180a, 180b are for example implemented on the same FPGA acting as the common processing unit 18.

In this regard it is to be noted that potentially signals of one channel module 2a, 2b could also be routed to the interface 208D of the other interface unit 17b, 17a associated with the other channel module 2b, 2a.

From the interface 208D the digitized RF signal is passed to a digital-to-analog converter 209D, which converts the digitized RF signal to an analog RF signal and passes the analog RF signal to a filter 210D and a mixer 211D. By means of the mixer 211D the analog RF signal is upconverted to the transmission frequency band and is passed to a power amplifier 212D for power amplification. The amplified analog RF signal then passes the duplexer 213 and is transmitted via the coverage port 21a, 21b and the coverage antenna 6a, 6b connected to the coverage port 21a, 21b in the downlink DL' to a respective terminal 4a, 4b, such as a mobile communication device in the shape of a smart phone or the like, located in the coverage area I.

In the uplink direction basically the same takes place, wherein the frequency band in general differs (the DCS-1800 band for example covers a frequency band between 1805,2 and 1879,8 MHz in the downlink and 1710,2 to 1784,8 MHz in the uplink). In the uplink UL an analog RF signal associated with a communication link is received via a coverage antenna 6a, 6b from a terminal 4a, 4b inside the coverage area I and is passed via the associated coverage port 21a, 21b to the duplexer 213, which provides the uplink analog RF signal to a low noise amplifier 203U. The amplified uplink analog RF signal then passes a mixer 204U for downconversion and a filter 205U for e.g. a bandpass filtering and is digitized in analog-to-digital converter 206U. Via the interface 207U of the interface unit 17a, 17b the digitized RF signal is then passed to the programmable filter 180a, 180b of the common processing unit 18, is filtered by selecting a channel or a subband comprising multiple channels and/or by performing a gain-adjustment and is forwarded via an interface 208U of the respective interface unit 17a, 17b or the interface 208U of the other interface unit 17b, 17a to a digital-to-analog converter 209U, which converts the uplink digitized RF signal to an analog RF signal. After passing a filter 210U and after being upconverted by mixer 211U, the analog RF signal is power amplified by a power amplifier 212U, passes the duplexer 202 and is then transmitted via port 20a, 20b and the associated donor antenna 5a, 5b to the associated base station 3a, 3b in the uplink UL'.

By means of the channel modules 2a, 2b in cooperation with the common processing unit 18 hence a conventional repeater functionality is provided which allows for providing coverage in a coverage area I. the repeater functionality herein is transparent in that no demodulation of a received signal takes place. The repeater device 1 merely filters and amplifies the signal in order to provide coverage in the coverage area I for one or multiple communication links (carriers) in one or multiple subbands of one or multiple frequency bands.

In another embodiment the repeater device 1 could also shift the frequency of the outgoing signals.

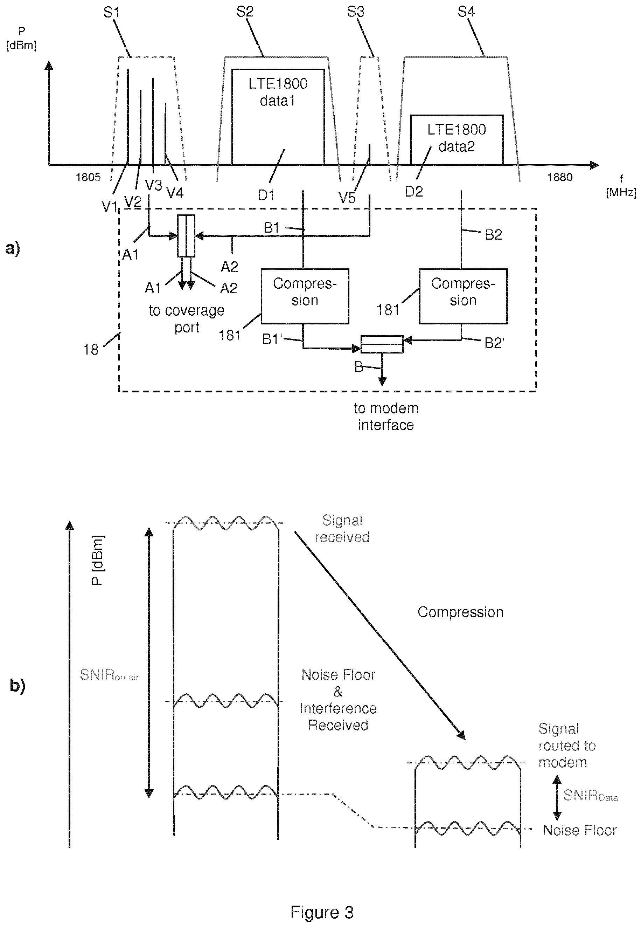

Fig. 3a illustrates the principle of an enhanced repeater device 1 which allows for a translation of a data communication link D1, D2 such as an LTE 1800 communication link being allocated in the DCS downlink frequency band between approximately 1805 and 1880 MHZ. For this, as shown in the embodiment of Fig. 4, the repeater device 1 comprises a modem module 2b' inserted in one of the slots 11-14 of the housing 10 of the repeater device 1 and being connected via an associated interface unit 17b to the common processing unit 18.

The data communication links D1, D2 are located in different subbands S2, S4 within the DCS-1800 downlink frequency band. In parallel, voice carriers V1-V5 in subbands S1, S3 shall be repeated into the coverage area I making use of the repeating functionality of one or multiple channel modules 2a-2c as described before. For this, by means of one or multiple channel modules 2a-2c the entire subbands S1, S3 including the voice carriers V1-V5 or particular voice carriers V1-V5 within the subbands S1, S3 by themselves can be forwarded as signal streams A1, A2 to the processing unit 18 and by means of the processing unit 18 as separate signal streams A1, A2 via one or multiple channel modules 2a-2c to respective coverage ports 21a-21c to provide coverage in the coverage area I. The processing of the voice communication links V1-V5 herein is transparent in that the voice carriers are amplified and forwarded to the coverage area I, but are not altered in their format and contents, as it is described above in reference to Fig. 2.

The data communication links D1, D2 in the subbands S2, S4 are not simply forwarded to the coverage area I. Instead, the data communication links D1, D2 are, via the common processing unit 18, routed to the modem module 2b' (see Fig. 4), which translates the data to a data signal for transmission to a data communication network such as an Ethernet network or a WLAN. Herein, signal streams B1, B2 are fed into the common processing unit 18 via the downlink path of a channel module 2a-2c and are compressed by a compressing unit 181 of the common processing unit 18, and the compressed signal streams B1', B2' are combined in the processing unit 18 to a common signal stream B which is the provided to the modem module 2b'.

The compression in the compression units 181 herein takes place in order to reduce the bit stream width. This is based on the understanding that a data communication link such as an LTE link has a fairly large dynamic range of 60 to 90 dB, which can be reduced when translating the data communication link to a network communication link in the coverage area I. Because propagation losses, near-far effects, fading and shading are of lesser influence in a confined coverage area I, a dynamic range of 20 to 30 dB in the coverage area I for communicating with a data communication network such as an Ethernet network or a WLAN is sufficient. A 16-bit signal hence may be compressed to a 4-, 5- or 6-bit signal, thus reducing the number of bits which must be transmitted to the coverage area I.

This is illustrated in Fig. 3b. A received signal of an on-air communication link such as an LTE link with a signal to noise and interference ratio SNIR_{on air} can be compressed to a signal having a signal to noise and interference ratio SNIR_{data} and may be routed to the modem module 2b' with such a compressed dynamic range.

As shown in Fig. 4, a data communication link received via the donor antenna 5a of the donor port 20a of the channel module 2a is processed, digitized and forwarded to the common processing unit 18 just as it has been described in connection with Fig. 2. The common processing unit 18, however, forwards the digitized RF signal associated with the data communication link, for example an LTE communication link D1, D2 as depicted in Fig. 3A, to a programmable router 180b' which directs the data stream B (see Fig. 3A) to the modem module 2b'.

The modem module 2b' comprises for example three data ports 20b', 21b', 22b'. Of such ports 20b', 21b', 22b' a first data port 20b' serves to provide a connection, via cable 60b', to a cable-bound data network such as an Ethernet network 600b' for example for a stationary computing device 7. To the second and third data port 21b', 22b' (of which for example the third data port 22b' may be optional) an antenna 61b', 62b' is connected for providing access to a wireless local area network (WLAN) 610b', via which a mobile terminal 4b in a wireless fashion can connect to the modem module 2b'.

The modem module 2b' serves to translate the digitized RF signal corresponding to the data stream B received from the programmable router 180b' of the common processing unit 18 into a data signal for transmission to the data communication network 600b', 610b'. In particular, the modem module 2b' produces air-interface-ready WiFi (IEEE 802.11) signals and radiates such signals into the coverage area I via its antenna 61b', 62b'.

In this regard it shall be noted that the antenna 61b', 62b' connected to the data port 21b', 22b' of the modem module 2b' as well as the coverage antenna 6a connected to the coverage port 21a of the channel module 2a may be constituted as a distributed antenna, for example a leaky feeder for providing distributed access to the repeater device 1 in the coverage area I. For this, the different ports 21a, 21b', 22b' of the repeater device 1 can be combined by using the combining unit 16 as shown in Fig. 1 (if the secondary port 22b' is not used for example as a MIMO port, in which case this port 22b' cannot be combined with the other ports 21a, 21b').

In the uplink direction the data transmission works in an analogous fashion. A data signal received via the data communication network 600b', 610b', for example WLAN data, are translated by the modem module 2b' into a signal stream of a digitized RF signal and are forwarded via the common processing unit 18 to the uplink path 209U-212U of the channel module 2a for uplink transmission to the base station 3a of the communication system 100.

It should be understood that not only client devices 4b, 7 located in the coverage area I may connect to the modem module 2b' of the repeater device 1. Also, a network element such as a server may connect to the modem module 2b' to communicate via the repeater device 1 with the telecommunication network of the base station 3a.

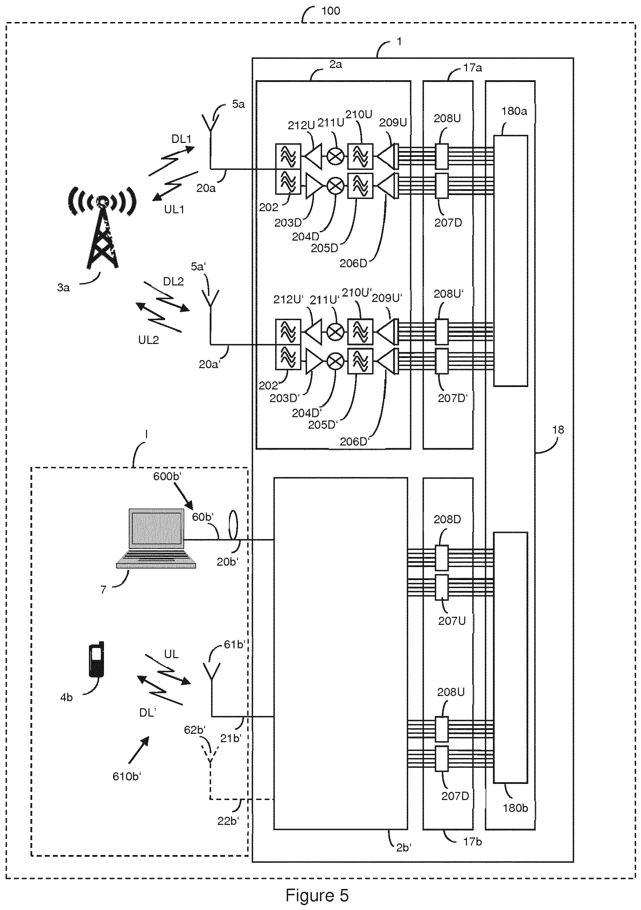

In the modified embodiment of Fig. 5 the channel module 2a comprises two donor ports 20a, 20a' connected to two donor antennas 5a, 5a' providing two separate downlinks DL1, DL2 and uplinks UL1, UL2. By means of the embodiment of Fig. 5 multiple data communication links of the telecommunication network may be forwarded at a time to the modem module 2b' for communication with the data communication networks 600b', 610b' in the coverage area I. The base station 3a herein may be constituted as a base station having a multiple-in-multiple-out antenna for communicating with multiple antennas 5a, 5a' at the same time. The antennas 5a, 5a' however may also receive signals from different base stations located at different locations.

Within the embodiment of Fig. 5 signals in the downlink DL1, DL2 are forwarded via the common processing unit 18 to the modem module 2b'. The processing paths 202-206D, 202'-206D' associated with the two downlinks DL1, DL2 herein are identical in the components they comprise and function as described above with reference to Fig. 2. The same is true for the processing paths 209U-212U, 209U'-212U' associated with the two uplinks UL1, UL2. In the downlink DL1, DL2, a received analog RF signal is digitized and forwarded to the common processing unit 18 and via the programmable router 180b to the modem module 2b'. In the uplink UL1, UL2, a digitized RF signal received from the common processing unit 18 is converted to an analog RF signal and is forwarded to the respective donor port 20a, 20a' for transmission via the donor antenna 5a, 5a'. Hence, two parallel radio communication links to a single base station 3a implementing for example a multiple-in-multiple-out antenna technology or to two separate base stations can be established.

It should be noted that by adding an additional channel module 2a-2c to the repeater device 1 in addition a repeating functionality can be provided to forward also voice carriers to the coverage area I, as it has been described in reference to Fig. 2.

Furthermore, it is to be understood that for the embodiment of Fig. 5 in principle the same channel module 2a as for example in the embodiment of Fig. 4 can be used. To modify the channel module 2a of Fig. 4 for use in the embodiment of Fig. 5 only the internal ports of the channel module 2a are changed and the local oscillator frequencies of the mixers 204D', 211U' are adjusted to downconvert respectively upconvert the downlink signals and uplink signals as required.

If a TDD system is present, instead of duplexers 202, 202' switches can be used. For the second donor section associated with port 20a' the switch directions then must in addition be synchronized with the switch of the first donor section associated with the donor port 20a.

By means of the repeater device 1 a modular device is provided which in a versatile manner can be used together with different arrangements of channel modules 2a-2c and modem modules 2b'. Independent of the particular combination of channel modules 2a-2c and modem modules 2b' herein the same interfaces 17a, 17b and common processing unit 18 are used such that by replacing one module by another a repeater device 1 of a different setup can be obtained in an easy and flexible manner.

In mobile repeater applications the adaption to changing band or carrier constellations can for example be performed based on GPS information and/or by information provided by the modem module 2b' or a separate external modem.

The idea underlying the idea disclosed is not limited to the embodiments described above, but may also be implemented in an entirely different fashion. In particular, the repeater device may be scalable to have a number of slots larger than four. The repeater device for example may have six, eight or 16 slots.

In addition, the on-air radio link is not restricted to LTE, but other radio links such as but not limited to GSM, GPRS, EDGE, HPSA, HPSA+ may be used.

Furthermore, also data communication networks other than Ethernet networks or WLANs are conceivable.

### List of Reference Numerals

- 1: Repeater device
- 10: Housing
- 11-14: Slot
- 100: Telecommunication system
- 15: Cover element
- 16: Combining unit
- 17a, 17b: Interface unit
- 18: Processing unit
- 180a, 180b: Programmable filter
- 180b': Programmable router
- 181: Compression unit
- 2a, 2b, 2c: Digital channel module
- 2b': Modem module
- 20a, 20b, 20c: Donor port
- 21a, 21b, 21c: Coverage port
- 20b', 21b', 22b': Data port
- 202, 202': Duplexer
- 203D, 203U, 203D': Low-noise amplifier
- 204D, 204U, 204D': Mixer
- 205D, 205U, 205D': Filter
- 206D, 206U, 206D': Analog-to-digital converter
- 207D, 207U, 207D': Interface
- 208D, 208U, 208U': Interface
- 209D, 209U, 209U': Digital-to-analog converter
- 210D, 210U, 210U': Filter
- 211D, 211U, 211U': Mixer
- 212D, 212U, 212U': Power amplifier
- 213: Duplexer
- 3a, 3b: Base station
- 4a, 4b: Terminal
- 5a, 5b, 5a': Donor antenna
- 6a, 6b: Coverage antenna
- 60b': Network cable
- 600b': Cable-bound data communication network
- 61b', 62b': Antenna
- 610b': Wireless data communication network
- 7: Stationary communication device
- A1, A2: Signal stream
- B1, B2, B1', B2', B: Signal stream
- DL, DL', DL1, DL2: Downlink
- D1, D2: Data communication link
- I: Coverage area (shielded environment)
- S1-S4: Subbands
- UL, UL', UL1, UL2: Uplink
- V1-V5: Voice communication link

## Claims

1. A digital repeater device (1), comprising:
- a common processing unit (18) and
- at least one channel module (2a-2c) connected to the common processing unit (18) and having at least one donor port (20a-20c, 20a') for transmitting to and receiving analog RF signals from a telecommunications network, the at least one channel module (2a-2c) being constituted to generate, in a downlink direction, a digitized RF signal from an analog RF signal received via the at least one donor port (20a-20c, 20a') and to forward the digitized RF signal to the common processing unit (18) and, in an uplink direction, an analog RF signal from a digitized RF signal received from the common processing unit (18) and to forward the analog RF signal to the at least one donor port (20a-20c, 20a'), wherein the at least one channel module (2a-2c) comprises at least one coverage port (21a-21c) for transmitting and receiving analog RF signals associated with a voice communication link (V1-V5), the channel module (2a-2c) being constituted to generate, in the downlink direction, an analog RF signal from a digitized RF signal received from the common processing unit (18) and to forward the analog RF signal to the at least one coverage port (21a-21c) for transmission into a coverage area (I) and to generate, in the uplink direction, a digitized RF signal from an analog RF signal received via the at least one coverage port (21a-21c) from the coverage area (I) and to forward the digitized RF signal to the common processing unit (18),
- at least one modem module (2b') connected to the common processing unit (18) and comprising at least one data port (20b'-22b') for communicating with a data communication network (600b', 610b'), wherein the at least one modem module (2b') is constituted to translate, in the downlink direction, a digitized RF signal received via the at least one channel module and associated with a data communication link (D1, D2) of the telecommunications network into a data signal for transmission via the at least one data port (20b'-22b') to the data communication network (600b', 610b') and to translate, in the uplink direction, a data signal received via the at least one data port (20b'-22b') into a digitized RF signal to be forwarded to the at least one channel module (2a-2c).

2. The digital repeater device (1) according to claim 1, **characterized in that** the data communication network is a wireless communication network (610b') such as a Wireless Local Area Network or a cable-bound communication network (600b') such as an Ethernet network.

3. The digital repeater device (1) according to claim 1 or 2, **characterized in that** the data communication link of the telecommunications network is a GPRS, EDGE, HSPA, HSPA+, LTE, CDMA2000, EVDO or WiMAX link.

4. The digital repeater device (1) according to one of claims 1 to 3, **characterized in that** the common processing unit (18) comprises a programmable filter (180a, 180b) to perform a channel selection and/or gain adjustment on digitized RF signals to be forwarded to the at least one coverage port (21a-21c) in the downlink direction or to the at least one donor port (20a-20c, 20a') in the uplink direction.

5. The digital repeater device (1) according to one of the preceeding claims, **characterized in that** the channel module (2a-2c) comprises two donor ports (20a-20c, 20a').

6. The digital repeater device (1) according to one of the preceeding claims, **characterized in that** the common processing unit (18) comprises a programmable router (180b') which in the downlink direction directs a digitized RF signal to the at least one modem module (2b').

7. The digital repeater device (1) according to one of the preceeding claims, **characterized in that** the common processing unit (18) is constituted to compress the digitized RF signal in at least the downlink direction to decrease its dynamic range .

8. The digital repeater device (1) according to claim 7, **characterized in that** compression in at least the downlink direction depends on a frequency band of the data communication link (D1, D2).

9. The digital repeater device (1) according to claim 8, **characterized in that** the amplification in the uplink direction applied is using information about the compression in the downlink direction.

10. The digital repeater device (1) according to one of the preceeding claims, **characterized by** a housing (10) having a plurality of slots (11-14) for receiving a channel module (2a-2c) or a modem module (2b'), wherein the at least one channel module (2a-2c) and the at least one modem module (2b') each are releasably inserted into an associated slot (11-14).

11. The digital repeater device (1) according to one of the preceeding claims, **characterized by** an interface unit (17a, 17b) associated with each slot for establishing the connection between the channel module (2a-2c) and the common processing unit (18) or the modem module (2b') and the common processing unit (18).

12. The digital repeater device (1) according to one of the preceeding claims, **characterized by** a combining unit (16) for combining two or more donor ports (20a-20c, 20a') and/or two or more coverage ports (21a-21c) into a single donor port to be connected with a single donor antenna (5a, 5b, 5a') or a single coverage port to be connected with a single coverage antenna (6a, 6b).

## Patentansprüche

1. Digitale Repeatervorrichtung (1), die Folgendes umfasst:
- eine gemeinsame Verarbeitungseinheit (18) und
- mindestens ein Kanalmodul (2a-2c), das mit der gemeinsamen Verarbeitungseinheit (18) verbunden ist und mindestens einen "Donor"-Port (20a-20c, 20a') aufweist zum Übertragen und Empfangen von analogen HF-Signalen von einem Telekommunikationsnetzwerk, wobei das mindestens eine Kanalmodul (2a-2c) aufgebaut ist zum Erzeugen in einer Downlink-Richtung eines digitalisierten HF-Signals aus einem analogen HF-Signal, das über den mindestens einen "Donor"-Port (20a-20c, 20a') empfangen wurde, und zum Weiterleiten des digitalisierten HF-Signals an die gemeinsame Verarbeitungseinheit (18) und zum Erzeugen in einer Uplink-Richtung eines analogen HF-Signals aus einem digitalisierten HF-Signal, das von der gemeinsamen Verarbeitungseinheit (18) empfangen wurde, und zum Weiterleiten des analogen HF-Signals an den mindestens einen "Donor"-Port (20a-20c, 20a'), wobei das mindestens eine Kanalmodul (2a-2c) mindestens einen "Coverage"-Port (21a-21c) zum Übertragen und Empfangen von analogen HF-Signalen umfasst, die einer Sprachkommunikationsverbindung (V1-V5) zugeordnet sind, wobei das Kanalmodul (2a-2c) aufgebaut ist zum Erzeugen in der Downlink-Richtung eines analogen HF-Signals aus einem digitalisierten HF-Signal, das von der gemeinsamen Verarbeitungseinheit (18) empfangen wurde, und zum Weiterleiten des analogen HF-Signals zu dem mindestens einen "Coverage"-Port (21a-21c) zur Übertragung in einen Abdeckungsbereich (I) und zum Erzeugen in der Uplink-Richtung eines digitalisierten HF-Signals aus einem analogen HF-Signal, das über den mindestens einen "Coverage"-Port (21a-21c) von dem Abdeckungsbereich (I) empfangen wird, und zum Weiterleiten des digitalisierten HF-Signals an die gemeinsame Verarbeitungseinheit (18),
- mindestens ein Modemmodul (2b'), das mit der gemeinsamen Verarbeitungseinheit (18) verbunden ist und mindestens einen Datenport (20b'-22b') zum Kommunizieren mit einem Datenkommunikationsnetzwerk (600b', 610b') umfasst, wobei das mindestens eine Modemmodul (2b') aufgebaut ist zum Übersetzen in der Downlink-Richtung eines digitalisierten HF-Signals, das über das mindestens eine Kanalmodul empfangen und einer Datenkommunikationsverbindung (D1, D2) des Telekommunikationsnetzwerks zugeordnet wurde, in ein Datensignal zur Übertragung über den mindesten einen Datenport (20b'-22b') zu dem Datenkommunikationsnetzwerk (600b', 610b') und zum Übersetzen in der Uplink-Richtung eines Datensignals, das über den mindestens einen Datenport (20b'-22b') empfangen wurde, in ein digitalisiertes HF-Signal, das an das mindestens eine Kanalmodul (2a-2c) weitergeleitet wird.

2. Digitale Repeatervorrichtung (1) nach Anspruch 1, **dadurch gekennzeichnet, dass** das Datenkommunikationsnetzwerk ein drahtloses Kommunikationsnetzwerk (610b') wie ein WLAN oder ein kabelgebundenes Kommunikationsnetzwerk (600b') wie ein Ethernet-Netzwerk ist.

3. Digitale Repeatervorrichtung (1) nach Anspruch 1 oder 2, **dadurch gekennzeichnet, dass** das die Datenkommunikationsverbindung des Telekommunikationsnetzwerks eine Verbindung des Typs GPRS, EDGE, HSPA, HSPA+, LTE, CDMA2000, EVDO oder WiMAX ist.

4. Digitale Repeatervorrichtung (1) nach einem der Ansprüche 1 bis 3, **dadurch gekennzeichnet, dass** die gemeinsame Verarbeitungseinheit (18) einen programmierbaren Filter (180a, 180b) umfasst zum Durchführen einer Kanalauswahl und/oder Verstärkungsanpassung an digitalisierten HF-Signalen, die an den mindestens einen "Coverage"-Port (21a-21c) in der Downlink-Richtung oder den mindesten einen "Donor"-Port (20a-20c, 20a') in der Uplink-Richtung weitergeleitet werden.

5. Digitale Repeatervorrichtung (1) nach einem der vorausgegangenen Ansprüche, **dadurch gekennzeichnet, dass** das Kanalmodul (2a-2c) zwei "Donor"-Ports (20a-20c, 20a') umfasst.

6. Digitale Repeatervorrichtung (1) nach einem der vorausgegangenen Ansprüche, **dadurch gekennzeichnet, dass** die gemeinsame Verarbeitungseinheit (18) einen programmierbaren Router (180b') umfasst, der in der Downlink-Richtung ein digitalisiertes HF-Signal an das mindestens eine Modemmodul (2b') leitet.

7. Digitale Repeatervorrichtung (1) nach einem der vorausgegangenen Ansprüche, **dadurch gekennzeichnet, dass** die gemeinsame Verarbeitungseinheit (18) aufgebaut ist zum Komprimieren des digitalisierten HF-Signals in mindestens der Downlink-Richtung, um seinen Dynamikbereich zu verkleinern.

8. Digitale Repeatervorrichtung (1) nach Anspruch 7, **dadurch gekennzeichnet, dass** die Komprimierung in mindestens der Downlink-Richtung von einem Frequenzband der Datenkommunikationsverbindung (D1, D2) abhängt.

9. Digitale Repeatervorrichtung (1) nach Anspruch 8, **dadurch gekennzeichnet, dass** die in der Uplink-Richtung angewendete Verstärkung Informationen über die Komprimierung in der Downlink-Richtung enthält.

10. Digitale Repeatervorrichtung (1) nach einem der vorausgegangenen Ansprüche, **gekennzeichnet durch** ein Gehäuse (10) mit mehreren Steckplätzen (11-14) zur Aufnahme eines Kanalmoduls (2a-2c) oder eines Modemmoduls (2b'), wobei das mindestens eine Kanalmodul (2a-2c) und das mindestens eine Modemmodul (2b') jeweils lösbar in einem zugehörigen Steckplatz (11-14) eingesetzt sind.

11. Digitale Repeatervorrichtung (1) nach einem der vorausgegangenen Ansprüche, **gekennzeichnet durch** eine Schnittstelleneinheit (17a, 17b), die jedem Steckplatz zugeordnet ist zum Aufbauen der Verbindung zwischen dem Kanalmodul (2a-2c) und der gemeinsamen Verarbeitungseinheit (18) oder dem Modemmodul (2b') und der gemeinsamen Verarbeitungseinheit (18).

12. Digitale Repeatervorrichtung (1) nach einem der vorausgegangenen Ansprüche, **gekennzeichnet durch** eine Kombinationseinheit (16) zum Kombinieren von zwei oder mehr "Donor"-Ports (20a-20c, 20a') und/oder zwei oder mehr "Coverage"-Ports (21a-21c) in einem einzelnen "Donor"-Port, der mit einer einzelnen "Donor"-Antenne (5a, 5b, 5a') verbunden werden soll, oder einem einzelnen "Coverage"-Port, der mit einer einzelnen "Coverage"-Antenne (6a, 6b) verbunden werden soll.

## Revendications

1. Dispositif de répéteur numérique (1), comprenant :
- une unité de traitement commune (18), et
- au moins un module de canal (2a à 2c) connecté à l'unité de traitement commune (18) et comportant au moins un port donneur (20a à 20c, 20a') pour transmettre des signaux RF analogiques à un réseau de télécommunications et pour en recevoir de celui-ci, ledit au moins un module de canal (2a à 2c) étant constitué pour générer, dans une direction de liaison descendante, un signal RF numérisé à partir d'un signal RF analogique reçu par l'intermédiaire dudit au moins un port donneur (20a à 20c, 20a') et pour retransmettre le signal RF numérisé à l'unité de traitement commune (18), et dans une direction de liaison montante, un signal RF analogique à partir d'un signal RF numérisé reçu de l'unité de traitement commune (18) et pour retransmettre le signal RF analogique audit au moins un port donneur (20a à 20c, 20a'), dans lequel ledit au moins un module de canal (2a à 2c) comprend au moins un port de couverture (21a à 21c) pour transmettre et recevoir des signaux RF analogiques associés à une liaison de communication vocale (V1 à V5), le module de canal (2a à 2c) étant constitué pour générer dans la direction de liaison descendante, un signal RF analogique à partir d'un signal RF numérisé reçu de l'unité de traitement commune (18) et pour retransmettre le signal RF analogique audit au moins un port de couverture (21a à 21c) pour une transmission dans une zone de couverture (I), et pour générer, dans la direction de liaison montante, un signal RF numérisé à partir d'un signal RF analogique reçu par l'intermédiaire dudit au moins un port de couverture (21a à 21c) de la zone de couverture (I) et pour retransmettre le signal RF numérisé à l'unité de traitement commune (18),
- au moins un module de modem (2b') connecté à l'unité de traitement commune (18) et comprenant au moins un port de données (20b' à 22b') pour communiquer avec un réseau de communication de données (600b', 610b'), dans lequel ledit au moins un module de modem (2b') est adapté pour traduire, dans la direction de liaison descendante, un signal RF numérisé reçu par l'intermédiaire dudit au moins un module de canal et associé à une liaison de communication de données (D1, D2) du réseau de télécommunications en un signal de données pour une transmission par l'intermédiaire dudit au moins un port de données (20b' à 22b') au réseau de communication de données (600b', 610b') et pour traduire, dans la direction de liaison montante, un signal de données reçu par l'intermédiaire dudit au moins un port de données (20b' à 22b') en un signal RF numérisé à retransmettre audit au moins un module de canal (2a à 2c).

2. Dispositif de répéteur numérique (1) selon la revendication 1, **caractérisé en ce que** le réseau de communication de données est un réseau de communication sans fil (610b') tel qu'un réseau local sans fil ou un réseau de communication câblé (600b') tel qu'un réseau Ethernet.

3. Dispositif de répéteur numérique (1) selon la revendication 1 ou 2, **caractérisé en ce que** la liaison de communication de données du réseau de télécommunications est une liaison GPRS, EDGE, HSPA, HSPA+, LTE, CDMA2000, EVDO ou WiMAX.

4. Dispositif de répéteur numérique (1) selon l'une quelconque des revendications 1 à 3, **caractérisé en ce que** l'unité de traitement commune (18) comprend un filtre programmable (180a, 180b) pour effectuer une sélection de canal et/ou un ajustement de gain sur des signaux RF numérisés à retransmettre audit au moins un port de couverture (21a à 21c) dans la direction de liaison descendante ou audit au moins un port donneur (20a à 20c, 20a') dans la direction de liaison montante.

5. Dispositif de répéteur numérique (1) selon l'une quelconque des revendications précédentes, **caractérisé en ce que** le module de canal (2a à 2c) comprend deux ports donneurs (20a à 20c, 20a').

6. Dispositif de répéteur numérique (1) selon l'une quelconque des revendications précédentes, **caractérisé en ce que** l'unité de traitement commune (18) comprend un routeur programmable (180b') qui, dans la direction de liaison descendante, dirige un signal RF numérisé vers ledit au moins un module de modem (2b').

7. Dispositif de répéteur numérique (1) selon l'une quelconque des revendications précédentes, **caractérisé en ce que** l'unité de traitement commune (18) est adaptée pour comprimer le signal RF numérisé au moins dans la direction de liaison descendante pour en diminuer la plage dynamique.

8. Dispositif de répéteur numérique (1) selon la revendication 7, **caractérisé en ce que** la compression au moins dans la direction de liaison descendante dépend d'une bande de fréquence de la liaison de communication de données (D1, D2).

9. Dispositif de répéteur numérique (1) selon la revendication 8, **caractérisé en ce que** l'amplification dans la direction de liaison montante appliquée consiste à utiliser des informations concernant la compression dans la direction de liaison descendante.

10. Dispositif de répéteur numérique (1) selon l'une quelconque des revendications précédentes, **caractérisé par** un boîtier (10) présentant une pluralité d'emplacements (11 à 14) pour recevoir un module de canal (2a à 2c) ou un module de modem (2b'), dans lequel ledit au moins un module de canal (2a à 2c) et ledit au moins un module de modem (2b') sont chacun insérés de manière amovible dans un emplacement associé (11 à 14).

11. Dispositif de répéteur numérique (1) selon l'une quelconque des revendications précédentes, **caractérisé par** une unité d'interface (17a, 17b) associée à chaque emplacement pour établir la connexion entre le module de canal (2a à 2c) et l'unité de traitement commune (18) ou le module de modem (2b') et l'unité de traitement commune (18) .

12. Dispositif de répéteur numérique (1) selon l'une quelconque des revendications précédentes, **caractérisé par** une unité de combinaison (16) pour combiner deux ou plusieurs ports donneurs (20a à 20c, 20a') et/ou deux ou plusieurs ports de couverture (21a à 21c) en un seul port donneur à connecter à une seule antenne donneuse (5a, 5b, 5a') ou en un seul port de couverture à connecter à une seule antenne de couverture (6a, 6b).
